# EUROPEAN PATENT APPLICATION

(11) **EP 4 822 398 A2**
(43) Date of publication of application: **14.10.2026**
(21) Application number: 26196859.8
(22) Date of filing: 21.12.2023
(51) Int. Cl.: G01S 17/42

(54) **SURVEYING SYSTEM AND METHOD WITH A SURVEYING DEVICE AND A MOVEABLE TARGET**

(62) Document number(s) of the earlier application(s) in accordance with Art. 76 EPC: 23219553.7 / 4 575 395
(71) Applicant: Leica Geosystems AG, 9435 Heerbrugg (CH)
(72) Inventor: KOTZUR, Norbert, 9450 Altstätten (CH); MAAR, Hannes, 6850 Dornbirn (AT); RÜST, Philipp Lukas, 9100 Herisau (CH); SCHÖLL, Benjamin, 9220 Bischofszell (CH); VAN BAVEL, Henri, 6800 Feldkirch (AT); MAYER, Martin, 6842 Koblach (AT)
(74) Representative: Kaminski Harmann

(57) **Abstract**

The invention relates to a surveying method with a surveying device, e.g., a total station, and a target, whereby the target can be tracked and surveyed by the surveying device. The target comprises at least one sensor for sensing a target motion and/or position. An uncertainty of a target position derived from the sensor data is determined and used for adaption of a target surveying.

## Description

The invention relates to a method and a system for surveying with a surveying device and a moveable target according to the independent claims.

The art of surveying involves the determination of unknown positions, surfaces or volumes of objects or setting out of known coordinates. In this case, direction or angle and usually also distance from a measuring device to the target point to be surveyed are recorded and, in particular, the absolute position of the measuring device together with reference points possibly present are detected as spatial standard data.

Generally known examples of such surveying devices for geodetic and/or industrial measurements include theodolite, total station (often also abbreviated as TPS) or laser tracker. Such devices have electrical-sensor-based angle and, if appropriate, distance measuring functions that permit direction and distance to be determined with respect to a selected target. In this case, the angle and distance variables are determined in the internal reference system of the device and, if appropriate, also have to be combined with an external reference system for absolute position determination.

Terrestrial surveying devices for surveying of object surfaces may be stationary. For example, they are stationed by a tripod in an environment or near a target object to be surveyed and thereof, the target is measured. Hence, for these devices, a fixed setup point is selected, which serves as a basis for a surveying process such that the recording location (as position of the surveying unit relative to the measured object) therefore remains unchanged during the surveying. The three-dimensional spatial information of the respective target point is derivable by way of the distance to the measured target, the angle position at the time of the measurement and the known location of the surveying apparatus.

In many geodetic or industrial applications, points are surveyed by specifically configured targets being positioned there or mounted on a movable vehicle. Said target consist for example of a plumb staff with a reflector (e.g., a 360° prism) for defining the measurement path or the measurement point. However, surveying systems which operate without reflectors are also possible, such as are described for example in the European patent application bearing the application number EP 10168771.3.

Modern total stations have microprocessors for digital further processing and storage of detected measurement data and a motorization of the targeting or sighting device. As a human-machine interface, the total station can have an electronic display control unit - generally a microprocessor computing unit with electronic data storage means - with display and input means, e.g., a keyboard. The measurement data detected in an electrical-sensor-based manner are fed to the display control unit, such that the position of the target point can be determined, optically displayed and stored by the control unit. Total stations known from the prior art can furthermore have a radio data interface for setting up a radio link to the target resp. handheld surveying pole with peripheral components such as e.g., a handheld data acquisition device.

For sighting or targeting the target to be surveyed, geodetic surveying devices can have a telescopic sight, such as e.g., an optical telescope, as sighting device. The telescopic sight is generally rotatable about a vertical axis and about a horizontal tilting axis relative to a base of the measuring device, such that the telescopic sight can be aligned with the point to be surveyed by pivoting and tilting. Modern devices can have, in addition to the optical viewing channel, a camera for detecting an image, said camera being integrated into the telescopic sight and being aligned for example coaxially or in a parallel fashion, wherein the detected image can be represented, in particular, as a live image on the display of the display control unit and/or on a display of the peripheral device used for remote control.

Robotic surveying devices of the state of the art have an automatic target tracking function (ATR: "Automatic Target Recognition"). For this, a further separate ATR light source and an ATR detector (e.g., CCD or CMOS area sensor) sensitive to the emission wavelength of said light source are conventionally additionally integrated in the telescope. With a surveying system providing tracking function, no operator needs to be assigned on the surveying instrument side, e.g., at the total station, during surveying and a surveying operator works on the target side. The target is moved by the surveying operator handling a surveying pole or the target is supported on a construction machine or other movable platform.

In the context of the ATR target tracking function, in this case the ATR measurement beam is emitted in the direction of the optical target axis of the sighting device and is retroreflected for example at a prism as target reflector and the reflected beam is received by the surveying device and detected by the ATR sensor.

Depending on the deviation of the alignment of the optical target axis from the prism, in this case the impingement position of the reflected radiation on the ATR sensor also deviates from a central detector area position (i.e. the reflection spot of the ATR measurement beam retroreflected at the prism on the ATR area detector does not lie in the center of the ATR area detector and therefore does not impinge on a desired position defined e.g., on the basis of calibration as that position which corresponds to the optical target axis). On the basis of the detected light spot position determined by image processing, correction angles are computed and then the alignment of the sighting device is re-adjusted in a motorized manner in such a way that the ATR measurement beam retroreflected at the prism is received precisely in the center of the detector area on the ATR area detector (i.e. the horizontal and vertical angles of the sighting device are thus iteratively changed and adapted until the center of the reflection spot coincides with the desired position on the ATR area detector). Besides target tracking, also an ATR fine targeting or fine sighting can be implemented by such precise, centered alignment of the sighting device to the target, using the same ATR components (such as ATR light source and ATR detector).

In order to ensure the functioning of the automatic targeting on the basis of evaluation of the position of the reflection spot of the ATR measurement beam retroreflected at the prism on the ATR area sensor, it is necessary, before the function starts, to align the sighting device with the target reflector at least approximately in such a way that the ATR measurement beam also impinges on the prism and, having been reflected from there, on the ATR area sensor. For this purpose, it is possible e.g., beforehand to effect manual targeting of the target reflector on the basis of measurement by eye or to perform an automatic coarse targeting function.

For automatic coarse targeting, automated theodolites or total stations are equipped with an optoelectronic target seeking and positioning device, referred to below as an automatic target detection unit, target-finding unit or so called PowerSearch unit or in short PS (unit). Such theodolites are able to rotate automatically toward the target point -in case line of sight to the target is not obstructed- and usually also at least to determine its position approximately. By means of the PS it is therefore possible to align the sighting device or the target axis automatically at least approximately with the target in such a way that above described fine sighting and/or target tracking is then possible by means of the ATR components.

A geodetic surveying system with a target-finding unit according to the prior art is proposed, for example, in US 6,035,254. According to this document, the total station as the surveying device and the target object are respectively equipped with a receiver for receiving GPS data. Position information for estimating the position of the target object from received GPS data is transmitted to the total station and is used at the total station to determine how the total station has to be aligned for sighting of the target object.

EP 1,329,690 discloses a method for automatically finding a geodetic target, wherein radiation which is emitted in a fan which is aligned vertically and which is pivoted horizontally is generated by a radiation transmitter unit of a PS, e.g. by means of a pulse laser diode. If the PS radiation impinges on the target, a portion of the radiation is reflected and received by a receiver unit, on the basis of which a horizontal angle with respect to the target is determined.

After the target has been found and an ATR fine targeting has been effected, i.e., once the sighting device is aligned with the target in such a way that the center of the ATR measurement radiation reflection spot coincides with the desired position - corresponding to the target axis - on the ATR area sensor, the sighting device can be tracked to movements of the target "live" and appropriately rapidly in such a way that the center of the ATR measurement radiation reflection spot furthermore remains as accurately as possible and always on the desired position on the ATR area sensor. It is then often stated that the target is "locked on".

However, even after successful target search and "lock on", problems can occur here if the target moves so jerkily and rapidly that it disappears from the field of view of the ATR detector (i.e., ATR measurement radiation reflected at the target no longer impinges on the ATR area sensor), which field of view is only some degrees, typically 1.5°. Other causes of an interruption of the optical link between main or total station and target may be, for example, unfavorable environmental conditions (precipitation, fog, dust, etc.) or simply obstacles such as a tree, a vehicle, a person, etc., which block the optical link. During such a line-of-sight or optical path obstruction, no information about the target is available and no points can be measured or staked out.

Besides using the possibility of a new target search as described above, various other solution proposals for addressing this problem are known in the art.

By way of example, EP 2 141 450 describes a surveying device having a function for automatic targeting of a retroreflective target and having an automatic target tracking functionality. In order in this case, even in the event of rapid and jerky movements, to keep the target in the "locked on" state and not to lose it from the field of view of the fine targeting detector, it is proposed to record images of the target in parallel by means of an overview camera (which is sensitive in the visible wavelength range), to define a specific image excerpt as target and, with the aid of image processing, to track movements of the target (or movements of objects which move concomitantly together with the target), and thereby to make it easier for the retroreflector to be found again and locked on again in the case of the target being lost from the "locked on" state.

US 2009/0171618 discloses a geodetic surveying system comprising a total station with targeting unit and an optical target tracking functionality in an embodiment similar to that known from the prior art, as described above. For a solution to the problem that the optical target tracking, for example on account of rapid and/or jerky movements of the target object, is interrupted by the target object disappearing from the field of view of the targeting unit, US 2009/0171618 discloses a position determining functionality for determining a direction of movement and a movement path of a target, that is to say corresponding to a movement determining functionality. As a technical implementation for fulfilling the movement determining functionality, an acceleration sensor mounted on the target or in a construction vehicle at the location of the target is described, the measured acceleration signals of which acceleration sensor are integrated by means of a supervisory unit, from which the speed of the movement and the distance covered starting from a predefined time, namely respectively the last reception of optical position determining data from the total station, are determined and stored. From the measured acceleration signals, a respective prediction is made for the position of the target object by the time of the next arrival by the optical position determining unit of the total station. Therefore, the solution to the problem as disclosed in US 2009/0171618 fulfils an auxiliary functionality for finding the target again after the optical contact has been lost in that a probable target position is estimated from the target acceleration values at which to aim and start search with the ATR-unit in order to establish a re-lock.

US 2010149518 discloses a surveying method for a measuring instrument comprising a position calculating circuit including a tracker and a servo system. There is a target predicting system which includes a state estimator adapted to calculate a model describing a path of or a distance to the target based on at least one data set obtained at a preceding measurement. The model predicts positions of the target. The position calculating system is adapted to, at initiation of a new measurement session, use the estimated position of the target when searching for the target. Thus, when a target is lost due to, for example, that the measuring beam is obstructed, the distance measuring system and the tracker and servo system may use said model to estimate where the target will be at a future time point, i.e., estimate the distance and angles to the target. Thereby, the distance measuring system and the tracker and servo system will have a good approximation of the position of the target and may thus start searching for the target with this approximate position as a first guess.

EP 2083245 discloses a surveying system with target tracking. In case the surveying instrument cannot track the target, a target position transmitted from a movable side control device installed on the target side is acquired, and the surveying instrument starts searching of the target with the target tracking unit and this target position as a starting point. The target position is determined by target displacement detecting means based on values of an acceleration sensor on the target wherefrom a speed and a distance and finally the moving direction and the moved distance from a predetermined time point are calculated. The position of the target to be received is a position obtained by correcting the last position of the target, which could not be tracked, by the movable side control device. The missed target is considered to be near the target position received. Thus, searching distance and searching range can be reduced.

There are also proposals in the prior art to use above mentioned automatic target detection unit or target-finding unit for search of a lost target as a rough position which however is precise enough to re-enable target tracking with the ATR unit.

EP 3199913 discloses a surveying device with an target-finding unit wherein the PS-alignment resp. the alignment of the target axis is changed actively according to a predefined pivoting profile while target-finding radiation is emitted - e.g., simple continuous and uniform pivoting in a horizontal pivoting direction - until target-finding radiation reflected back from the then hit target is received.

However, though there are numerous proposals for re-establishing tracking of a lost surveying target known in the art as exemplified above, these proposals still suffer in terms of robustness of finding a lost target or require a considerable amount of time until a target is locked again.

It is therefore an object of the present invention to provide a system and a method comprising a surveying device and a target for improving geodetic surveying.

A further object of the present invention to provide a system and a method comprising a surveying device and a target for improving geodetic surveying for situations in which the target is out of line of sight of the surveying device.

Still another object of the present invention to provide a system and a method comprising a surveying device and a target for improving geodetic surveying for improved target search or surveying of hidden object points.

These objects are achieved by realizing the features of the independent claims. Features which further develop the invention in an alternative or advantageous manner are described in the dependent patent claims.

The present invention relates to a surveying system for surveying and tracking a movable target. The system comprises a surveying device, such as a theodolite, total station or laser tracker with position determining functionality for determining the position of the target.

The surveying device comprises a base, a targeting device defining a targeting direction or target axis, wherein the alignment of the target axis is variable relative to the base in a motorized manner for sighting of the target and tracking of the target when moved (following a movement of the target). The target axis can be described by an azimuth angle and an elevation angle with respect to a center of the surveying device resp. targeting device. The surveying device further has an angle measuring functionality for detecting the current alignment of the target axis, and distance measuring functionality for determining the current distance to the target. The surveying device further comprises photosensitive means (a light detector) for detecting light originating from the target and generating a detection signal thereof. Preferably, the light originates from the target by being back-reflected, wherefore the surveying device comprises a light emitter for emitting light to the target, whereby the emitting direction is dependent on the alignment of the target axis. Alternatively or additionally, ambient light is reflected from the target and therewith originates from the target or the target light originates from the target in that the target actively emits light.

The surveying system further comprises a target sensor, provided on the target side, for, preferably continuously, sensing a movement (motion) and/or position of the target and generating a target sensor signal thereof (which sensor allows for determination of a target position fully independent of the surveying device).

The control and evaluation unit, preferably integrated in the surveying device, is configured to provide (in a manner automatically controlled) a (first) target tracking based on the detection signal of the photosensitive means, a second target tracking based on said target sensor signal, and, based on the second tracking, a target search for re-establishing of the detection signal based first tracking in case of failure of the first tracking.

Thereby, a target position uncertainty of the second target tracking is determined and the target search is dependent on the target position uncertainty.

Hence, there is provided a surveying system with an adaptive target search functionality in that the control and evaluation unit is configured to determine a positional uncertainty of the target and is able to initiate a target search which is adapted to the determined positional uncertainty of the target. Instead of using an inflexible or invariable ("one-size-fits-all") search which can lead to (too) much effort, loss of time or failure of target search, the search functionality is tailored to the (degree of) knowledge about the target position and can be continuously modified in view of changes of target position uncertainty. This allows to react in particular to a growth of target position uncertainty in time, which is a common situation using sensors for measuring motion/displacement and/or position at the target and in particular important in surveying situations with a longer obstruction of the line of sight from the surveying device to the target.

As an option, the control and evaluation unit is configured to select in dependence on the amount of target position uncertainty an operation parameter of a light emitting and/or light receiving unit, such as a static and/or dynamic angle of light emittance and/or light reception.

Alternatively or additionally, the control and evaluation unit is configured to select in dependence on the amount of target position uncertainty from different light emitting and/or light receiving units of the system used for the target search. As a further option for systems having different light emitting and/or light receiving units, the control and evaluation unit is configured to select a first unit for search in azimuth direction and a second unit for search in elevation direction.

Optionally, the target sensor is embodied as an inertial measurement unit (IMU), a GNSS module (Global Navigation Satellite System such as GPS), a camera (for image based tracking), a time-of-flight camera, a wheel encoder (wheel odometry) or a LIDAR. Additional or auxiliary sensors which provide supplemental positional information can be used such as a barometer.

Optionally, the system comprises an auto-motive platform, in particular a printing robot and/or a drone, and the target is attached to the platform, whereby the platform comprises a platform sensor as embodiment of said target sensor or as a sensor in addition to the target sensor for sensing a movement and/or position of the platform and generating a platform sensor signal thereof in time synchronized manner with the target sensor signal (by the sensor situated at the target side) and the second target tracking is also based on the platform sensor signal.

Optionally, the first target tracking is also based on the movement and/or position of the target sensed on the target side, e.g., using sensor fusion algorithms.

In some embodiments, the system comprises multiple target sensors, provided on the target side, for sensing movement and/or position of the target using sensor fusion, in particular whereby the target sided sensors comprise an inertial measurement unit and sensor fusion is based on a Visual Inertial SLAM-algorithm.

In some embodiments, the control and evaluation unit comprises a sensor fusion algorithm, a simple heuristic algorithm and/or a pseudo measurement algorithm for determining the amount of target position uncertainty.

The invention relates also to a method for automatically tracking a movable surveying target (a target object that defines a target point) with a surveying device. The surveying device has a target axis alignment angle and target distance measuring functionality.

The method comprises a (first) tracking of the target based on light detected by the surveying device. Said light originates from the target as being back-reflected or actively emitted by the target.

In case there is a failure of first tracking, in particular failure of detection of said target light, there is another, second tracking of the target based on a movement and/or position of the target sensed on the target side and there is a searching for the target based on the second tracking for re-establishing of the first tracking.

Thereby, a target position uncertainty of the second tracking is determined and the searching for the target is dependent on the target position uncertainty.

Hence, there is no fixed or (fully) predetermined search strategy but advantageously, the searching for the target is flexible and is adapted to an uncertainty of (estimated) target position. Thus, an amount of positional uncertainty, which usually varies with different circumstances, in particular grows with time since last determined position by the first tracking, can be taken into account when searching for the target.

As an option in case the searching for the target is based on detecting light originating from the target with the surveying device, the target search is dependent on the target position uncertainty in that a static and/or dynamic field of view for receiving the light is selected in dependence on the amount of target position uncertainty. For example, one of at least two different optical units of the surveying device providing different fields of view are selected in dependence on the uncertainty.

As another option in case the searching for the target is based on detecting light originating from the target with the surveying device, the target search is dependent on the target position uncertainty in that an angle of static and/or dynamic light emittance is selected in dependence on the amount of target position uncertainty. For example, an angle of swiveling and/or light divergence angle of a light source is selected in dependence on the uncertainty. Alternatively or additionally, one of at least two different optical units of the surveying device providing different illumination fields is selected in dependence on the uncertainty.

Thus, the search area covered for target search is dynamically adapted to the amount of target position uncertainty, by changing a field of view and/or a field of lighting used for target search.

As a further option, the searching for the target is also dependent on an estimated distance between target and surveying device.

As another option, a notice is output to user, preferably by a human-machine-interface of the target such as a display of a field controller or connected electronic device, in dependence on an amount of target position uncertainty determined by evaluation of the target sensor data. The notice comprises a level of target position and/or target attitude accuracy, an indication of an area in which the target is searched, e.g., by a graphical map overlay, an indication that first tracking is (re-)established and/or an instruction that a movement of the target has to be stopped (enabling or facilitating target search, e.g., in case of a moving sight obstruction such as a vehicle or person in between target and surveying device, the obstruction movement can be recognized, e.g. using a camera of the surveying device, and the movement of the target can be stopped to let the moving obstruction pass).

In some further developments of the target tracking method, the second tracking provides at least a 3-DoF target position, in particular a 6-DoF target pose, and/or the second tracking is according to the principle of dead reckoning.

In some further developments, there is machine learned evaluation of movement and/or position of the target sensed on the target side in course of the second tracking.

In some further developments, an amount of target position uncertainty comprises a covariance and/or uncertainty radius of an estimated target position.

In some further developments, the target position uncertainty is determined with a rate of at least 10Hz, in particular at least 100Hz.

In some further developments, searching for the target comprises a searching in azimuth direction and independent thereof, a searching in elevation direction.

The present invention also relates to a method for surveying with a movable surveying target and a surveying device. The surveying device has target axis alignment angle and target distance measuring functionality.

The surveying method comprises a first surveying of the target -i.e. determination of spatial target position- based on light detected by the surveying device, the light being emitted from the surveying device and back-reflected from the target.

In case there is a failure of first surveying, in particular failure of light detection (which is not necessarily said surveying light, but comprises also for example target tracking light), there is a second surveying of the target based on a pose of the target sensed on the target side if an amount of target pose uncertainty of the sensed target position is below a defined upper (maximally accepted) uncertainty threshold as criterion for feasibility of second surveying, which test is automatically made.

Hence, an alternative way of surveying/a second surveying is provided (based on a position of the target sensed on the target side) which can replace the basic or standard first way of surveying (measurements with the surveying device) in case the first surveying fails, whereby there is an automatic evaluation, based on a determined uncertainty of target position and target attitude, whether the second surveying is possible (with sufficient precision, e.g. of the pole tip of a surveying pole).

As an option, the surveying method comprises improving accuracy of a position determined by the second surveying based on a respective amount of target pose (assigned to the position) uncertainty which amount is referenced to a positional reference provided by the first surveying and/or a first tracking (based on surveying device sided units), in particular a point measurement when re-establishing first surveying and/or first tracking after a period of second surveying.

As another option, the surveying method comprises outputting a notice, in particular by a human-machine-interface of the target, to a user based on the amount of target position uncertainty. The notice comprises a level of target position and/or orientation accuracy (second surveying precision), an indication that second surveying is possible or impossible (e.g., in form of an acoustic or visual warning signal) and/or an instruction about an action such as a target movement or manual (trigger of a) target search to be initiated by the user for re-establishing the first surveying, e.g., indication of a location/area/movement direction or target orientation or height needed for successful target search, for example in form of a graphical notice such as a map overlay.

Above methods can in particular be executed using the above described system.

The present invention also relates to a computer program product comprising program code which is stored on a machine-readable medium, or being embodied by an electromagnetic wave comprising a program code segment, and having computer-executable instructions for performing the claimed method or methods, particularly when executed on a control and evaluation computing unit of a system as claimed.

Devices, methods, systems, setups and computer programs according to the invention are described or explained in more detail below, purely by way of example, with reference to working examples shown schematically in the drawing.

Specifically,
- Figs. 1a-e: show schematically a surveying system with an opto-electronic surveying device having a distance and angle measuring and a target fine-targeting and tracking functionality and a surveying target as in principle known in the art;
- Fig. 2: schematically illustrates a proposed method allowing for a fast and robust re-lock onto a lost target based on a determined target sensor based positional uncertainty;
- Fig. 3: illustrates a surveying system with a total station and a retroreflector target arranged on a construction vehicle as an example of a moving target platform; and
- Fig. 4: illustrates as a flow chart another example of a method wherein a positional uncertainty is taken into account for adaptive target search and intermediate surveying.

**Figs**. **1a****-e** show schematically a surveying system as in principle known in the art and also described in the introducing technical background section above, providing target searching, fine-targeting and tracking functionality as well as target measuring functionality.

The surveying system comprises an opto-electronic surveying device 2 for example embodied as a total station, and a target 1, e.g., a retro-reflector 11, which is used as an auxiliary instrument to mark an object point P to be surveyed. Hence, the target object 1 defines a target point. The surveying device 2 has a control and evaluation unit or central processing unit or digital signal processor 26, which however could also at least be partly externalized, e.g., in form of a field controller 14 and/or combined with the CPU/DSP 16 of the target 1, using communication interfaces 30 for data exchange. The total station 2 further has a base 21b and an upper part 21a.

The upper part 21a can pivot with respect to the base 21b about a first axis z. The first axis z is aligned vertically as a standing axis.

The upper part 21a has a sighting device 22 with a lens unit, for example a telescopic sight or a telescope. A target axis 4 or line of sight L is defined by the sighting device 22. The alignment of the target axis 4 can be changed by pivoting the upper part 21a about the first, vertical axis z and in addition, the alignment of the target axis 4 about a second, in the example horizontal, axis x can be changed by actuators, in particular a horizontal drive 25x and a vertical drive 25z. For this purpose, the upper part 21a has a support 24b and a head part 24a which can pivot with respect to the support 24b about the second axis x and in which the sighting unit 22 is integrated. The respective horizontal and vertical alignment angles 27x, 27z are measured by angle encoders and evaluated by the central processing unit or digital signal processor 26 of the surveying device.

The surveying device 2 further comprises an optical distance measuring unit 29 having at least one beam source, e.g., one or more laser diodes or superluminescence LEDs for beam emission in direction of the target axis 4 and at least one optoelectronic detection unit - for example an electronic distance meter (EDM). With the detection of the received beam B, a distance from the measuring apparatus to the target point is ascertained, e.g., by means of time-of-flight, phase difference measurement or by means of the Fizeau principle. By means of suitable synchronization of the angle sensors and distance measuring unit 29, two angles and at least one distance ascertained by means of the distance measurement radiation B are combinable to form a, e.g., a polar, 3D coordinate of the target 1.

For surveying an object point P with the surveying system, usually the total station 2 is set up at a defined position in the field, referenced in an absolute coordinate system (hence, measurements in the internal coordinate system can be referenced to the external absolute coordinate system) and levelled, e.g., using an inclination sensor 28 of the total station 2. The plumb rod 11 of known length, which supports the target reflector 1 and can comprise sensors 12 such as an inertial measurement unit (IMU) 12a, a barometer 12b, a GNSS sensor, a camera, a stereo camera, a Time of Flight camera, a Light Detection and Ranging (LIDAR) device (the latter all not depicted in the figure), etc., in defined positional relationship to the target reflector 1 by a rigid mechanics interface, is transported by user 10 to the target point P to be surveyed. There, the plumb rod 11 is positioned held perpendicular on the point P. As illustrated, the pole 11 or target 1 can comprise means 15 for target identification such as ID LEDs in order to unambiguously identify a target and prevent erroneous surveying of a wrong target. This is particularly advantageous in surveying areas with multitudes of target objects.

After positioning and target identification, the distance and direction measurement to be performed by the total station 2, in particular the transmitting along target axis 4 and receiving of a laser beam B for distance measurement, is triggered for example in automated manner by a remote control of a user device 14 such as a field controller by a wireless communication interface 30 via antennas 13, 23 of the pole 11 resp. total station 2. The absolute target point position is calculated from the measured absolute reflector position and the known reflector/target point distance.

Besides the targeting measuring unit, a target-finding unit or so called power search unit 5 -referred to for short as PS (unit)- and a target fine-sighting or fine targeting and tracking unit 6 -referred to for short as ATR (unit)- are integrated into the head part 24a, comprising a first radiation source 8 and a second radiation source (not illustrated), respectively. As a result of the exemplary arrangement of the target-finding unit 5, of the target fine-sighting unit 6 and of the sighting device 22 in the head part 24a, these three units are located in a defined and fixed positional relation with respect to one another and can pivot together about the first axis z and second axis x. The target-finding unit 5 has a first radiation source 8 and a photosensitive line sensor or detector 7.

As an alternative to the illustrated arrangement, the target-finding unit 5 can be integrated in the support 24b with the result that although the spatial reference relation of the target axis 4 with respect to the reception fan of the line detector 7 is defined, there is no fixed positional relation present, since although both the sighting unit 22 and the PS 5 together change the horizontal alignment by pivoting of the upper part 21a, the sighting unit 22 can pivot about the second axis x, but the PS 5 cannot.

As another alternative, instead of a reflector, the target object 1 could for example also carry itself one or more light sources (not necessarily a source of visible light), from which a light beam is emitted in a defined manner in the direction of the total station 2 to be received and detected there. That is, the ATR-unit can be subdivided between surveying device 2 and target 1 in that the fine-targeting radiation source can be located at the target 1. Similarly, also the target finding light source of the PS-unit could be situated at the target 1. Hence, target search radiation 9 or target tracking radiation 10 can be originating from the target 1 by emittance from a target's radiation source instead of reflection. Reflection-based approaches can also make use of ambient light which the target 1 reflects in direction of a light detection unit of the surveying device 2 such as a camera for target tracking and/or search, wherefore the target 1 can comprise e.g. an optical pattern or optical markers for image based recognition or tracking.

In any case, the first radiation source 8 generates, preferably pulsed, target-finding radiation 9, for example modulated laser radiation. In the depicted example, the target-finding unit or PS 5 has means by means of which the target-finding radiation 9 can be emitted into free space. The emission here takes place using the means in a multi-directional fashion, in the form of a vertical transmission fan 9a in the example, the angle of aperture of which transmission fan 9a is, for example between 20° and 70° or 30° and 50° and can be variable. Target-finding radiation 9 which is retro-reflected from the target object 1 can be detected by the line sensor 7, wherein the line sensor 7 has a reception range which is in the shape of a fan (not illustrated), and the plane of the fan is preferably arranged vertically like that of the transmission fan. The target axis 4 is, for example, in the plane of the reception fan. Alternatively, the target axis 4 is parallel with respect to the plane of the reception fan or is in another fixed and defined spatial reference relation with respect thereto.

Next, the target fine-targeting unit 6 has a second radiation source (not illustrated) and a large-area sensor or detector 6d. The second radiation source generates fine-targeting radiation 10, e.g., laser radiation. The target fine-sighting unit 6 has means by means of which the fine-sighting and tracking radiation 10 can be emitted coaxially with respect to the target axis 4 in the form of a radiation cone 10a with a small angle of aperture. The angle of aperture is e.g., at maximum 5° or 2° and is, for example, precisely 1.5°. Fine-sighting radiation 10 which is retro-reflected by the target object 1 can be detected by the large-area sensor 6d.

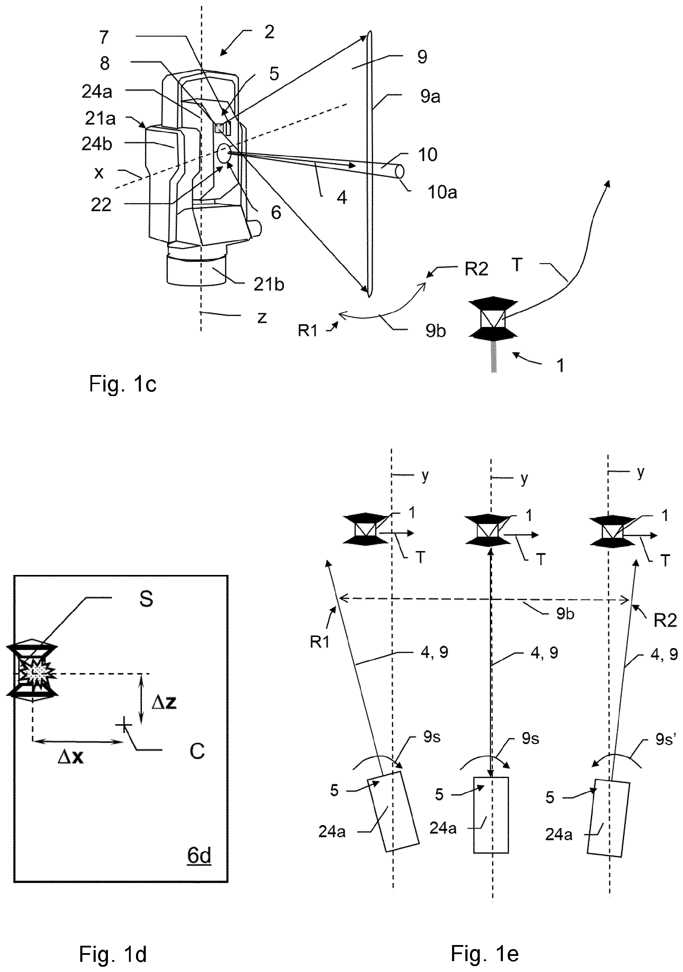

As shown in figure 1d, schematically showing an ATR-image with fictional overlay of the target 1 for illustration purposes, the impinging position S of the reflected and received fine-sighting radiation 10 can be used to derive a target position. The radiation 10 is emitted in the direction of the optical target axis 4, is retroreflected at the reflector 1 and the reflected beam is detected by the detector 6d. Depending on the deviation of the alignment of the optical target axis 4 from the reflector 1, the impingement position S of the reflected radiation on the detector or the spatially resolving sensor 6d in this case also deviates by amounts or offsets Δx, Δz from a central sensor area position C (i.e. the reflection spot S of the laser beam reflected at the reflector 1 on the area sensor 6 does not lie in the center C thereof and therefore does not impinge on a desired position C, which was defined e.g. on the basis of calibration as that position which corresponds to the optical target axis 4).

After coarse detection of the target object 1 by the ATR detector 6, the targeting device is subsequently aligned more precisely with the target object 1, and subsequent target surveying and tracking of a moving target can take place. In accordance with the ascertained deviation Δx, Δy of the position of the reflection spot S from the desired position C, it is possible to determine correction angles for the alignment of the targeting axis 4 and to perform corresponding corrections by means of driven servomotors 25x, 25z until the reflection spot S and desired position C correspond to one another, that is to say that the horizontal and vertical angles of the sighting or targeting device 2 are (iteratively) changed and adapted in this way until the center of the reflection spot S coincides with the desired position C on the detector 6d. Hence, the target axis 4 and therewith target fine-sighting unit 6 are aligned precisely with the target object 1 by pivoting the head part 24a about one or both axes x, z, with the result that the impinging position S is the center C of the large-area sensor 6d.

In the case of a moving target object 1, the target axis 4 is automatically adjusted in such a way that the impinging position continues to be as far as possible in the center C. That is, the targeting device 2 can furthermore be tracked to movements of the target object 1 "live" and appropriately rapidly in such a way that the center of the reflection spot S furthermore remains as accurately as possible and always on the desired position C on the area sensor 6d (so-called "lock on", or latched, coupled, or locked to the target).

In any case, in order to achieve "locking on" to the target 1, the target 1 must firstly be found once, i.e., the target axis 4 must firstly be aligned at least approximately with the target 1 so that the fine-sighting radiation 10 actually impinges on the retro-reflector and is therefore retro-reflected somewhere onto the large-area sensor 6d. This is generally not the case from the outset owing to said small angle of aperture of the fine-sighting radiation 10. This is why the target finding unit PS 5 is present.

Because of the defined spatial reference relation, which is also possibly fixed as in the example, of the transmission fan 9a and reception fan of the power search unit 5, radiation cone 10a of the fine-sighting radiation 10 and target axis 4, it is possible, given an initially unknown relative position of the target object 1 and total station 2 with respect to one another, to bring about alignment of the target axis 4 with the target object 1 by firstly pivoting the upper part 21a, and therefore the transmission fan 9a, about the first axis z, and therefore changing the alignment of the target axis 4, until target-finding radiation 9, reflected from the target object 1, is received and detected by the line sensor 7. As a result, the horizontal alignment of the target axis 4 corresponds to the direction towards the target 1. The head part 24a is then pivoted about the second axis x until the fine-sighting radiation 10 impinges on the target 1 and the alignment of the target axis 4 also corresponds in the vertical direction to the direction towards the target 1.

A single alignment of the target axis 4 is, however, not sufficient for target finding if the target 1 is moving along a trajectory T relative to the surveying device 2, which is the case e.g., when the target object 1 is mounted on a surveying rod 11 which is moved along by a user 50 or mounted on a mobile vehicle whose target position is to be determined continuously or at specific time intervals. Apart from the case of a relative movement which is only very minor or slow, in fact, within the time period of the pivoting of the target axis 4 about the second axis x, the actual horizontal direction towards the target object 1 moves away from the set horizontal alignment of the target axis 4 so quickly that the radiation cone of the fine-sighting radiation 10 does not impinge on the target object 1 but rather passes it by and therefore no light spot S is present at all on the detector 6d.

As illustrated in figure 1e in a birds' eye perspective, for searching such a moving target 1, the target search unit 5 is swept. The head part 24a with the target-finding unit 5 and the target object 1 (which is illustrated from a different perspective for the sake of better clarity) are shown, said target object 1 is moving relative to the surveying device or the target-finding unit 5, as a movement T in the example transversely with respect to the y axis (symbolized by the arrow), purely for the sake of simplicity in the example. The power search unit 5 continuously emits target-finding radiation 9 in the form of said vertical transmission fan, wherein target-finding radiation 9 which is reflected from the target object 1 is received by means of the reception fan of the PS 5 and detected by the line sensor. In the illustrated example of the birds' eye view, the transmission fan and the reception fan are represented together as an arrow, wherein an arrow tip at both ends symbolizes that target-finding radiation 9 is received and also detected. Purely for the sake of simplicity in the example it is also assumed that the spatial reference relation between the reception fan of the PS 5 and the target axis 4 is such that the target axis 4 is in the plane of the fan 9a. The dashed arrow therefore also symbolizes the target axis 4.

On the left side of figure 1e, pivoting of the head part 24a, and therefore of the PS 5 and of the target axis 4, about the first axis z, that is to say in the horizontal plane in the example, is illustrated, said pivoting occurring in a first pivoting direction to the "right" (arrow 9s) from a start point or direction R1 and serving as a change in initial alignment of the target axis 4. For the sake of simplified or faster alignment of the target axis y with the target 1, the latter is optionally provided here with a GNSS receiver as an example of a target sensor 12, and a position of the target 1 which is determined therewith is used for the change in initial alignment (however, GNSS signals are not available everywhere, e.g., indoors, in tunnels or in crowded or narrow environments such not seldom at construction sites or open pit mines). In the instantaneous relative position of the target object 1 and surveying device the target-finding radiation 9 passes by the reflector "on the left".

The middle of exemplary figure 1e illustrates that this change in initial alignment has occurred to such an extent that the target-finding radiation 9 indeed impinges on the target object 1 and is reflected, received and detected, wherein the pivoting in the first pivoting direction (arrow 9s) is still continued here.

On the right side of figure 1e, the alignment of the target axis 4 is such that the transmission fan then passes by the target object 1 "on the right". The pivoting in the first pivoting direction and therefore the change in the initial alignment are ended, the head part 24a is stopped at a reversal point R2 of the pivoting movement is then reached and then the pivoting is reversed (arrow 9s').

The steps illustrated in figure 1e are repeated continuously, with the result that alternating pivoting or sweep of the upper part 24a and the targeting axis 4/emission direction of search light 9 occurs continuously, and therefore the first change in alignment occurs in an alternating fashion. The alignment of the target axis 4 oscillates to and fro between the two reversal points R1 and R2, wherein the two reversal points R1 and R2 shift dynamically as a function of the (horizontal) direction with respect to the moving target 1 (i.e., the movement reversal at a respective reversal point R1, R2 occurs with in each case a different horizontal alignment of the target axis 4). The reversal points R1, R2 thus define a sweep span or (horizontal) search "field of view" 9b, which field of view 9b can be continuously shifted, e.g., for following a target movement T.

As a result, the target axis 4 can track the horizontal movement tendency of the target 1, that is to say in the example the movement of the target object in the horizontal direction (symbolized by the arrow T), i.e. the target axis 4 can follow the course or trend of the movement T of the target 1, with the result that the target axis 4 in the example tracks the target 1 to the "right", or rather is carried along with the target 1. The central alignment of the target axis 4, i.e., its alignment without taking into account the oscillating movement as a result of the alternating pivoting, therefore always corresponds at least approximately to the direction of the surveying device with respect to the moving target 1 which allows for aligning the fine targeting radiation onto the target 1 resp. to lock onto it even if it moves.

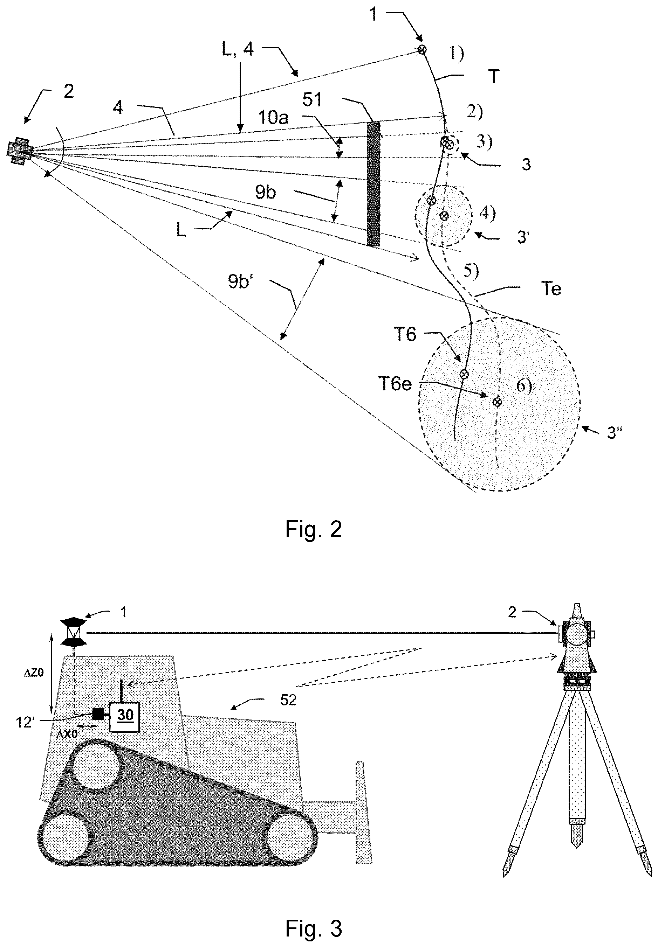

However, target movements as mentioned can also cause loss of an already locked target 1. For instance, the target object 1 moves so jerkily and rapidly that it disappears from the field of view of the detector 6d. Other reasons for loss of lock or line of sight L are bad environmental conditions (e.g., rain), flying spots (a plurality of reflections lying close together generated by a single 360° prism) or a disturbing object such as a wall in between the target object 1 and the surveying device 2 (cf. object 51 in following figure 2). If the lock is lost, the surveying has to stop and wait for the instrument 2 to find the target 1 again. Thereby, there is also the problem as already mentioned that e.g., on a construction site there are often multiple target 1 present, for example a plurality of prisms on and around a machine. It happens that if prisms are close the lock jumps from one prism to another prism and the wrong machine is tracked. Hence, a quick as possible and robust re-lock onto a moving target 1 is desirable.

Fig. 2 schematically illustrates a proposed method allowing for a fast and robust re-lock onto a lost target 1. Shown is in a top view a movement T of a target 1 in relation to a stationed surveying device 2.

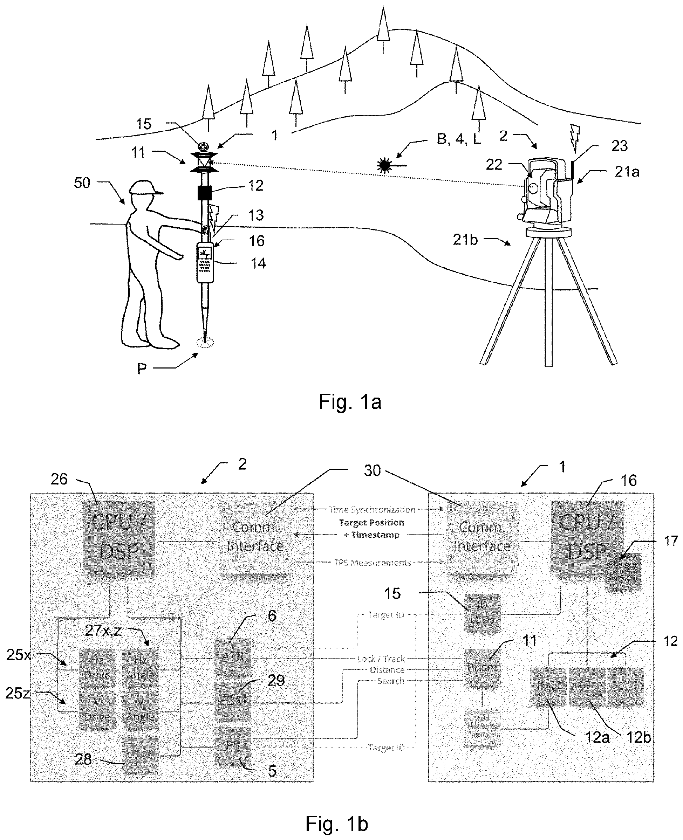

The target 1 comprises at least one sensor means for determining a position or movement on the target side, such as a GNSS sensor or - as a preferred example- an IMU 12a of a sensor 12 (cf. figures 1a, 1b, too). The data of the target sensor are evaluated, e.g., by the target's processor (CPU/DSP 16 in figure 1b) using sensor fusion algorithms (reference sign 17 in figure 1b) as in principle known in the art (e.g., Kalman filter, Simultaneous Location And Mapping SLAM, etc.), to provide information about the target's position/motion.

This position or movement information evaluation provided on the target side is denoted as second tracking in contrast to above described surveying device side tracking, denoted as first tracking. In other words, the second tracking is based on target sensor data whereas the first tracking is based on surveying device detector data, wherefore the first tracking is also denoted as detector (based) tracking and the second tracking as sensor (based) tracking. (However, sensor data provided by the target can also be used for improving the tracking by the surveying device, e.g., increasing accuracy or robustness of the first tracking).

The second tracking can be used to follow a moving target 1 in case the first tracking is not possible, as in principle known in the art. That is, the second tracking can be used to bridge the detection signal-based tracking and can be seen as an intermediate tracking between two first tracking procedures. The second tracking provides an estimate of target trajectory Te (dashed line in the figure).

This is exemplified in the figure 2 in that at a point or time 1), the target 1 is locked in, first, ATR-detector based tracking is executed as there is a line of sight L from the device 2 to the target 1 (the first tracking is considered to provide the true target trajectory T).

However, at point 2), the target 1 has moved behind a disturbing object 51, seen from the surveying device 2. There is no more line of sight L because of the obstacle 51 and first tracking (and surveying by the surveying device 2) is not possible any more.

From point 2) on, the target position is determined (solely) based on the target sensor(s), in course of the -here denoted- second target tracking functionality. This sensor-based target position is used follow the target 1 (as good as possible, using the sensor-based position estimation) by rotation of the surveying device 2 resp. of its target axis 4 while trying to re-establish the first tracking again, i.e., to be able to hit the target 1 again with ATR-radiation (reference sign 10 in figure 1c).

However, the target sided movement tracking / position determination has uncertainty in target position which not only is high compared to the comparably precise first, ATR-tracking (the sensor-based estimation of movement Te differs considerably from the true movement T). But which uncertainty usually also grows in time resp. with moved distance, in particular if the second target tracking is based on the principle of dead reckoning as is the case when using IMU measurements. This is indicated in the figure by the growing circular areas 3, 3' and 3", the radii of which indicate schematically an amount of uncertainty (and indicated in that the difference between the trajectories T and Te increases).

Hence, the longer (or farer) the target 1 has been lost, the more unlikely it is that the current alignment of the target axis 4 actually points to the target 1, at least accurately enough to enable re-lock when a line of sight L would be available as no obstruction such as wall 51 is present any more. Hence, at least after some time it does usually make little sense to rely on the ATR-unit to enable device-based tracking and surveying again. On the other side, usage of the target search unit or power search from the start of target loss (point 2) might be an "overkill" and an unnecessary effort and loss of time. Then again, even the target search might be not well fitted to the real situation, e.g., the power search unit inadequately configured in terms of field of view or measurement rate to quickly find the target 1 again or find it at all.

As solution, there is not only a determination (or estimation) of the target movement and/or position based on the target sensor or target sensors (and an according second tracking), but an amount of uncertainty of the target based position estimation is determined and the target search for relocking the target 1 is made dependent on the determined uncertainty. Said otherwise, the uncertainty of a current target position estimated based on the target's sensor data is considered for searching for the target 1. Therefore, the current positional uncertainty may for instance be determined on the target side by the target DSP 16 (cf. figure 1b) and communicated to the DSP 26 of the total station 2, together with the sensed target position and timestamps, using time synchronization. However, as an alternative the target sensor data could also be transmitted to device's DSP 26 or another CPU and fused/evaluated there for a real-time calculation (e.g., with a rate of 10Hz to 500 Hz) of the position uncertainty estimate.

In the example, the positional uncertainty is used to select or dimension a "field of view" or covered area of the target search. For instance, a flat, in the example horizontal angle range (which could also be a solid angle) within which the target is search is defined in dependence on the target position uncertainty.

In particular, at time or position 3) (e.g., within the first second or seconds after loss of line of sight L), the uncertainty 3' is still relatively small. The uncertainty 3' is yet only such small that it is expected that the target 1 is still somewhere within the field of view 10a of the ATR unit. In consequence, the target 1 is searched with the ATR only, that is, fine targeting/tracking light is emitted and it is tried to detect reflected light with the ATR detector. If such light originating from the target 1 is in fact detected, the first tracking is re-established without any further measures, i.e., the target search is stopped.

In the example however, as the target 1 is still behind the obstacle 51, the ATR-based search is futile and it is not possible to re-install first tracking. Instead, the target position determined in course of the second, e.g., dead reckoning tracking is growing, e.g., to an amount as indicated by circle 3' at time or point 4).

As it is now expected in view of the current uncertainty that there is a high probability that the target 1 is not anymore within the field of view 10a of the fine targeting ATR unit, the target search is not based on the ATR-unit anymore.

Instead, the target finding PS-unit is activated for target searching, schematically indicated in the figure by new search field 9b, when the uncertainty is exceeding a defined threshold as an adaption to a current target position uncertainty in real time.

In more general terms, the system's control and evaluation unit is configured to select a target search unit which is deemed appropriate to a current positional uncertainty. As detailed in the following, the method further comprises that a selection of a parameter of a target search is made dependent on the degree of uncertainty, too.

As indicated in the figure, the target 1 is still not visible to the surveying device 2 due to the wall in between. Hence, also the PS is unable to find the target 1. As the target 1 still is moving, also the uncertainty is increasing, e.g. to a level is schematically indicated in figure 2 by the large circle 3".

This increase is taken into account in that a parameter of the power search is adapted, in particular in that the field of view or search window of the PS is expanded. This is indicated in the exemplary figure in that the sweep range 9b' of the search (search angle or "FoV" of the search unit) is increased at time 6) (the distance between the reversal points is enlarged; cf. figure 1e) from the previous smaller sweep range 9b at time 4); of course, this can be a more or less continuous process. In other words, the oscillation amplitude of the PS, which covers a large elevation angle of 40° and oscillates in azimuth around the target position estimate, is based on the target position uncertainty. While the power search determines the azimuth angle to the target, the ATR can still search in elevation whereby the ATR-elevation search can also be made dependent, e.g., restricted, based on uncertainty such that an even faster re-lock is possible after obstruction.

Other examples of settings that can be set according to the target position uncertainty 3, 3', 3" are for instance a start point of the search, a search direction (alignment of the target axis), ATR-laser divergence, etc. Also, the search can depend on further variables in addition to the uncertainty 3, 3', 3" such as an estimated distance from the surveying device 2 to the target 1 (as for example the area seen by a FOV increases with distance and the time until the uncertainty 3, 3', 3" exceeds the area increases with distance).

Now at point 5), the target 1 has passed the obstacle 51 and a line of sight L is in principle given. The true position T6 at time 6) differs considerably from the estimated target position T6e because of said uncertainty of the target sensor-based position estimation. Nevertheless, due to the automatic adaption of the target search to the actual uncertainty 3", in the example by selection of a "fitting" target search device and adaptive configuration of a search parameter of such a search device, the search angle or FoV 9b', with the center at the currently estimated position T6e, is large enough that the true target position T6 is therein. Thus, the target 1 will be found and there will be a re-lock by the surveying device 2.

In other words, the adaptive second, target sensor-based tracking -adaptive in real time to a determined "live" value or amount of target position uncertainty 3, 3', 3"- allows for a robust and quick re-start of the first, surveying device detection based tracking.

Of course, the uncertainty 3, 3', 3‴ is not necessarily considered a "2D"- or horizontal value as indicated in the figure merely for sake of clarity of illustration, but can be determined with respect to all degrees of freedom of the target, e.g. as a 3D-sphere around estimated position Te. The target sensor data may provide an estimate with respect to the three translational DoF or may provide also one or more rotational DoF of the target 1, in particular there is a 6-DoF determination in course of the second tracking based on the sensor data, i.e., full position and orientation or in short, a complete target pose. Accordingly, also the adaption of the target search can be with respect to different degrees of freedom, e.g., an adaption of a horizontal search area and a - corresponding, or alternatively a different- vertical search area.

For providing target movement resp. position with respect to a high number of DoF and/or for providing an improved accuracy (or reducing or limiting drift, hence, providing a lower uncertainty 3, 3', 3"), more than sensor on the target side can be used. Thereby, methods of sensor fusion can be applied such as simple heuristics, Kalman filter, pseudo measurement, etc. Also machine learning algorithms can be used by the evaluation unit, for instance tightly learned inertial odometry (TLIO). Algorithmic improvements are possible by introducing motion states (e.g. zero velocity updates), too, to improve accuracy and reduce or limit the drift.

For example, improvements are possible by performing sensor fusion of e.g., an IMU plus a barometer at the target to reduce height-drift in position estimate. In addition or alternatively, optical or optoelectronic target sensors such as a camera, TOF, LiDAR can be used to perform SLAM, VSLAM (Visual SLAM) or VIS (Visual Inertial SLAM) at the target for increased position accuracy during a dead reckoning phase, e.g., by fusing IMU-data with camera, TOF camera, LIDAR-data, VIS is possible to reduce IMU drift or limit or stop further IMU drift and feature higher accuracy/lower uncertainty 3, 3', 3".

**Fig. 3** illustrates a surveying system with a total station 2 and a retroreflector target 1 arranged on a construction vehicle 52.

The vehicle 52 comprises one or more vehicle's motion or position sensors 12' such as a sensor for odometry, a camera or LIDAR. These vehicle sensors 12' are arranged in defined positional relationship to the target 1, indicated in the figure as distances ΔZ0 and ΔX0.

The data of these vehicle's sensors can be used instead of sensors directly arranged at the target 1. Otherwise, the vehicle sensor data can be incorporated into a position and position uncertainty determination in combination with data of sensors of the target 1 using sensor fusion. Such additional motion or position sensor data enables improved dynamics and accuracy in a control loop comprising an automotive target platform (to be positioned) and a surveying device 2 that provides reference measurements.

For this purpose, the target device 1 can have an interface to the vehicle 52 to get its sensor data and perform time synchronization. Other examples than the depicted construction machine 52 for automotive target platforms are a ground based robot, e.g., a printing robot, or an airborne vehicle like a drone or copter.

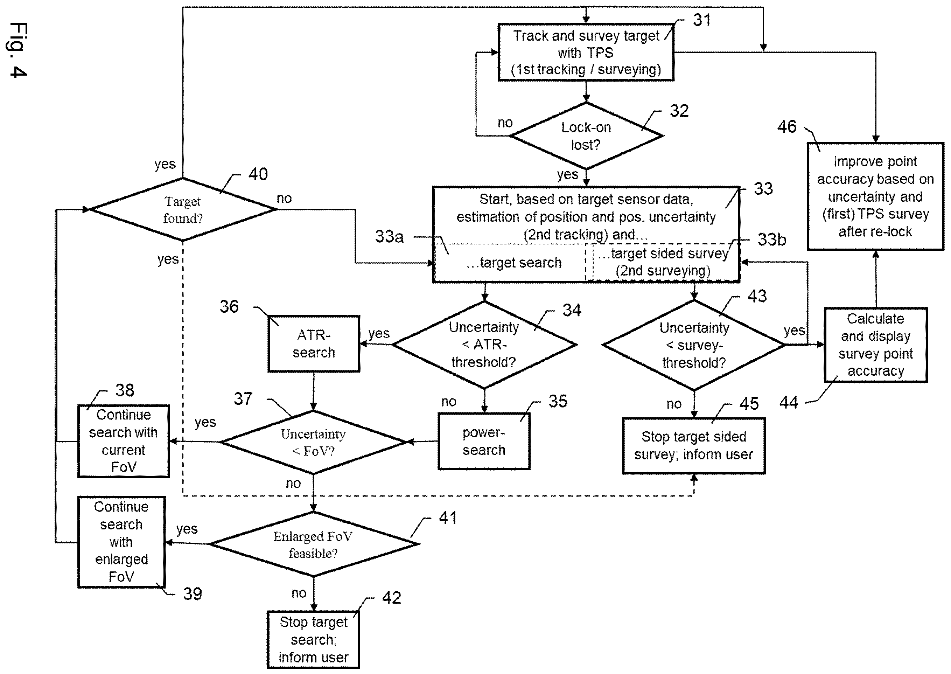

**Fig. 4** illustrates as a flow chart another example of a method which can be executed by a computer program product run on a control and evaluation unit of a surveying system, wherein a positional uncertainty is taken into account.

At the beginning step 31, there is a standard tracking of the target as well as surveying of the target using detectors on the total station (TPS) side, in particular by a target fine targeting or ATR functionality and angle and distance measuring functionality (as exemplified in context of figures 1a-d), denoted as first tracking and first surveying.

This first tracking and surveying can be continued until the line of sight from the TPS to the target or the lock onto the target is lost (step 32).

In case of target loss, a continuous determination of target position (second tracking) is determined as well as an uncertainty of this position determination based on target motion and/or position sensors (step 33) (however, such target sensor-based determination can also run in parallel to the first tracking and surveying anyway).

Further, a target search is initiated (step 33a), based on the target position and uncertainty determination resp. second tracking (as already exemplified above in context of figures 2 and 3, too). In parallel, also a target sided surveying, denoted second surveying is initiated which is also based on the position sensed by the target sensors and dependent on the determined positional uncertainty. This second survey can be linked to the second tracking as exemplified and further described below, but can in principle also be executed independently thereof.

In course of said target search, there is a verification if the position uncertainty is within a so called ATR-threshold (step 34), e.g., if it does not exceed the ATR's field of view (which may be often the case shortly after the loss of lock, e.g., within the first second or seconds). More generally spoken, in step 34 it is examined if the current uncertainty allows to use a first search unit of the surveying device. If this is the case, searching for the target with the first unit, in the example the ATR-unit is started. If it is not (longer, e.g., after a couple of seconds) the case, another search unit, e.g., the power search unit is selected. That is, a search unit is selected in step 34 which is able to cope with the current amount of uncertainty.

It is continuously checked if the selected search unit resp. its configuration is fitting to the current uncertainty of the target position. In the example, this is illustrated at step 37 in that it is verified if the selected FoV is large enough in view of the positional uncertainty or if it can be expected that the target is within the currently covered search area.

If the answer is "yes", the search is continued with the current search parameters, e.g., current FoV (step 38); if not, the search parameters are adapted, e.g., the FoV is enlarged (step 41) and the search is continued with the adapted configuration (step 39) until the target is found (steps 33a and step 40).

In case the target position uncertainty is too large, i.e., no search configuration or selection of parameters/search units is possible which can address the large uncertainty, the target search is stopped (step 42). Preferably as depicted, a user is noticed about this search stop. Then the user can react for instance by transporting the target to a location where a line of sight is surely given or start a standard initial, completely new target coupling process (which could also be started automatically by the control unit as an alternative).

Now referring again to the above mentioned second surveying 33b. As the one or more target sensors may be able to produce quite accurate measurements on their own, in particular in case of a plurality of sensors resp. applying sensor fusion and/or within a first time period after a loss of line of sight, point surveying can be continued based on the target sensor data. For instance, dead reckoning based on IMU position is sufficiently accurate to output valid point measurements up to tenths or hundredths of milliseconds after the first surveying or line of sight has been interrupted. This period can be extended, for instance, using SLAM respectively VIS (IMU + Camera), as the position error growth can be reduced or even "eliminated" and accurate surveying is still feasible. Also by "zero velocity updates" (ZVU), where the error does not grow once the pole is put down (not moving anymore), a satisfying surveying precision can be maintained.

Thus, at least some time after the lock onto the target is lost, a point surveying using the target's positional sensors can be applied. By step 43, a verification is applied which evaluates if conditions are met, e.g., if the uncertainty is below a defined survey-threshold.

If conditions are not met, the target sided survey is stopped (step 45). Otherwise, the second surveying can be continued. Thereby, as indicated by box 44, also an accuracy of surveying can be determined and output. In other words, a point accuracy estimate can be computed from the uncertainty estimate.

The point accuracy can be indicated (at significant change or continuously) to the user at the pole, in particular during obstruction/NLOS. That is, based on the used sensors (e.g., computer vision features by camera), their measurement quality and the resulting uncertainty (position error estimate), a point accuracy notification system can be implemented. For example, a handheld controller at the surveying pole (reference signs 11 and 14 in figure 1a) may output accuracy based on a traffic light system: red = out of tolerance, yellow = point accuracy between 2cm and 3cm, green = point accuracy below 2cm. The user can then decide if he continues measuring based on the accuracy indicator or whether he needs to re-establish a line of sight/TPS based surveying for sufficient accuracy.

Thereby, point accuracy of the measured points during no line of sight, i.e., measured with the second surveying, can be improved in post processing considering the respective determined uncertainty (step 46). As soon as line of sight and therewith TPS reference is available again after loss of lock incident (loop closure), the determined positional drift can be distributed to the measured points (the respective uncertainty linked to a distinct survey point, e.g., by way of point accuracy derive therefrom) with a surveyed position provided by the first surveying at the end or completion of the second surveying as reference for correction. For example, the very first TPS-measurement when re-locked onto the target can be used as position reference.

This second surveying facilitates "hidden point measurements" where the surveyor carrying the target may (intentionally or unintentionally) move into an area out of line of sight (no TPS reference) for a limited amount of time to take some intermediate target sensor-based measurements and then return to line of sight resp. go back in an area accessible by the total station's measuring beam.

But even in areas which are in principle observable by the TPS, a target sided second surveying can be applied to increase measurement rate. That is, one or more target sensed survey points are captured in between two surveying device detected survey points. In other words, second surveying can be applied regularly in parallel to first surveying to provide additional survey points to fill measurement spans or "gaps" of the first surveying. Then, the TPS reference may only be required from time to time or occasionally and can also be used as loop closure to refine second surveyed point accuracy as described above.

A skilled person is aware of the fact that details, which are here shown and explained with respect to different embodiments, can also be combined with details from other embodiments and in other permutations in the sense of the invention.

## Claims

1. A method for surveying with a movable surveying target and a surveying device, the surveying device having target axis alignment angle and target distance measuring functionality, the method comprising
• a first surveying of the target based on light detected by the surveying device, the light being emitted from the surveying device and back-reflected from the target,
• in case there is a failure of first surveying, a second surveying of the target based on a pose of the target sensed on the target side, in particular sensed using SLAM, VSLAM and/or VIS, upon automatic decision if an amount of target pose uncertainty of the sensed target pose is below a defined upper uncertainty threshold as criterion for feasibility of second surveying.

2. The method according to claim 1,
**characterized by**
improving accuracy of a position determined by the second surveying based on a respective amount of target pose uncertainty, which amount is referenced to a positional reference provided by the surveying device.

3. The method according to claim 2,
**characterized by**
the positional reference comprises a point measurement when re-establishing first surveying after a period of second surveying.

4. The method according to any one of claims 1 to 3,
**characterized in that**
based on an amount of target pose uncertainty, a notice is output to a user, in particular by a human-machine-interface of the target, the notice comprising at least one of
• a level of target position and/or attitude accuracy,
• an indication that second surveying is possible or impossible,
• an instruction about an action to be initiated for re-establishing the first surveying.

5. The method according to claim 4,
**characterized in that**
the action to be initiated comprises at least one of
• a target movement or
• a manual target search or manual trigger of a target search to be initiated by a user for re-establishing the first surveying.

6. The method according to claim 5,
**characterized in that**
the method comprises indication of a location, area, movement direction, target orientation and/or height needed for successful target search, in particular in form of a graphical notice such as a map overlay.

7. The method according to one of the preceding claims,
**characterized by**
determining a survey point accuracy estimate based on the amount of target pose uncertainty and indicating the survey point accuracy to a user at the target, in particular based on a red-yellow-green traffic light system, particularly with red = out of tolerance, yellow = point accuracy between 2cm and 3cm, green = point accuracy below 2cm.

8. The method according to one of the preceding claims,
**characterized by**
applying the second surveying of the target in parallel to the first surveying to provide additional survey points to fill measurement spans or gaps of the first surveying and/or to increase measurement rate.

9. The method according to one of the preceding claims,
**characterized in that**
the method comprises automatically tracking the movable surveying target with the surveying device, with
• a first tracking of the target based on light detected by the surveying device, the light originating, in particular back-reflected, from the target,
• in case there is a failure of first tracking, in particular failure of light detection, a second tracking of the target based on a movement and/or position of the target sensed on the target side,
• searching for the target based on the second tracking for re-establishing of the first tracking, wherein the searching for the target is dependent on a determined target position uncertainty of the second tracking.

10. The method according to claim 9,
**characterized in that**
• the searching for the target is based on detecting light originating from the target with the surveying device and a static and/or dynamic field of view for receiving the light is selected in dependence on the amount of target position uncertainty, in particular by selecting one of at least two different optical units of the surveying device providing different fields of view, and/or
• the searching for the target is based on detecting received light originating from the target and an angle of static and/or dynamic light emittance is selected in dependence on the amount of target position uncertainty, in particular by selecting
□ an angle of swiveling and/or light divergence angle of a light source and/or
□ one of at least two different optical units providing different angles of light emittance, and/or
• the searching for the target is also dependent on an estimated distance between target and surveying device.

11. The method according to any one of claims 9 or 10,
**characterized in that**
based on an amount of target position uncertainty, a notice is output to user, in particular by a human-machine-interface of the target, the notice comprising at least one of
• a level of target position accuracy,
• an indication of an area in which the target is searched, in particular as a map overlay,
• an indication that first tracking is established,
• an instruction that a movement of the target has to be stopped,
• an indication that the first tracking could not be established, in particular after a timeout period.

12. The method according to any one of the preceding claims,
**characterized in that**
the failure of first surveying comprises failure of detection of light, in particular surveying light and/or target tracking light.

13. A surveying system for surveying and tracking a movable target, comprising
• a surveying device, in particular designed as a theodolite, total station or laser tracker, with position determining functionality for determining the position of the target, wherein the surveying device comprises
□ a base,
□ a targeting device defining a target axis, wherein the alignment of the target axis is variable relative to the base in a motorized manner for sighting and tracking of the target when moved,
· angle measuring functionality for detecting an alignment of the target axis, and · distance measuring functionality for determining a distance to the target,
· photosensitive means for detecting light originating, in particular back-reflected, from the target and generating a detection signal thereof,
• a target sensor, provided on the target side, for sensing a movement and/or position of the target and generating a target sensor signal thereof,
and
• a control and evaluation unit configured to provide
□ a first target tracking based on the detection signal,
□ a second target tracking based on the sensor signal, and,
□ based on the second tracking, a target search for re-establishing of the detection signal based first tracking in case of failure of the first tracking,
**characterized by**
• a first surveying of the target based on light detected by the surveying device, the light being emitted from the surveying device and back-reflected from the target,
• in case there is a failure of first surveying, in particular failure of detection of light, a second surveying of the target based on a pose of the target sensed on the target side upon automatic decision if an amount of target pose uncertainty of the sensed target pose is below a defined upper uncertainty threshold as criterion for feasibility of second surveying.

14. The system according to claim 13,
**characterized in that**
the target sensor is embodied as at least one of
• an inertial measurement unit,
• a GNSS module,
• a camera,
• a time-of-flight camera,
• a LIDAR,
• a wheel encoder.

15. Computer program product having computer-executable instructions implemented for executing the method according to claim 1, in particular when run on a control and evaluation unit of a system according to claim 13.
